# EUROPEAN PATENT APPLICATION

(11) **EP 3 441 733 A1**
(43) Date of publication of application: **13.02.2019**
(21) Application number: 18187710.1
(22) Date of filing: 07.08.2018
(51) Int. Cl.: G01J 3/18, G01J 3/28, G01J 3/02

(54) **A SPECTROPHOTOMETER**

(30) Priority: 08.08.2017 IT 201700091938
(71) Applicant: CHEMA S.r.L., 57016 Rosignano Marittimo (LI) (IT); Ma.Vi. S.R.l., 57128 Livorno (IT)
(72) Inventor: LENZI, Alessandro, 57023 Cecina (Livorno) (IT); CULIVICCHI, Giorgio, 56048 Volterra (Pisa) (IT); DOMENICI, Valentina, 57016 Rosignano Marittimo (Livorno) (IT); CIFELLI, Mario, 56124 Pisa (IT); VERICINI, Carlo Alberto, 56127 Pisa (IT); MARZOCCHI, Luciano, 57123 Livorno (IT); VITERBO, Francesco, 57128 Livorno (IT)
(74) Representative: Lunati & Mazzoni S.r.L.

(57) **Abstract**

A spectrophotometer (1) is comprised designed to analyse a sample, associable with a source (3) designed to emit a radiation engraving the sample and comprising a support (2) designed to support the sample when engraved by the radiation; a diffractor (5) defining a diffraction surface (5a) designed to separate the radiation exiting the sample according to the wavelength; a detector (7) defining a sensitive surface (7a) adapted to receive the radiation exiting the diffractor (5) and substantially parallel to the diffraction surface (5a).

## Description

The present invention relates to a spectrophotometer of the type specified in the preamble of the first claim.

As is known, spectrometers are used for studying a sample (usually an opportunely liquid fluid) engraved by a radiation and in particular by a light radiation.

In principle, a known spectrophotometer consists of a lamp (for example a pre-concentrated tungsten halogen lamp) emitting radiations within the spectral measurement range; a grid dividing the radiation into discrete spatially/angularly separated wavelengths; a support for the sample to be analysed; a detector, which measures the radiation intensity; and a processor, which analyses the sample according to a comparison between the sample absorption values and absorption values of a non-absorbing sample (called "white").

In some cases, the spectrophotometer can comprise a monochromator selecting the radiation wavelengths engraving the sample.

Furthermore, a known spectrophotometer has an optical system consisting of lenses, mirrors and slits.

In detail, the optical system usually comprises a first slit and a first lens placed upstream (with respect to the advancing direction of the radiation) with respect to the sample; and a plurality of second lenses placed downstream with respect to the sample and adapted to convey the radiation exiting the sample towards the detector, preventing the dispersion thereof; and a focusing lens for the radiation exiting the sample on the detector.

The described prior art comprises a number of important drawbacks.

In particular, spectrophotometers used today are characterised by large designs, which reduce the portability, handling and practicability thereof.

An important drawback lies in the fact that, in order to work properly, known spectrophotometers require an almost perfect reciprocal alignment of the various components and, consequently, are very sensitive to knocks and the like.

Such aspect is evident in the second lenses, which, being central in conveying the radiation exiting the sample towards the detector, preventing the dispersion thereof, require a very precise arrangement, both as regards the detector and, consequently, between one another.

Such drawback translates both into elevated manufacturing complexity and high costs of a known spectrophotometer.

In this situation, the technical task underlying the present invention is to conceive a spectrophotometer capable of substantially overcoming at least part of the stated drawbacks.

It is an important object of the invention, within the scope of said technical task, to obtain a spectrophotometer, which is both easy and practical to carry, handle and use.

Another important object of the invention is to make a spectrophotometer characterised by high analysis quality, which is also easy to make and with reduced costs.

The technical task and the specified objects are achieved with a spectrophotometer as claimed in the appended claim 1. Preferred embodiments are described in the dependent claims.

Preferred embodiments are highlighted in the dependent claims.

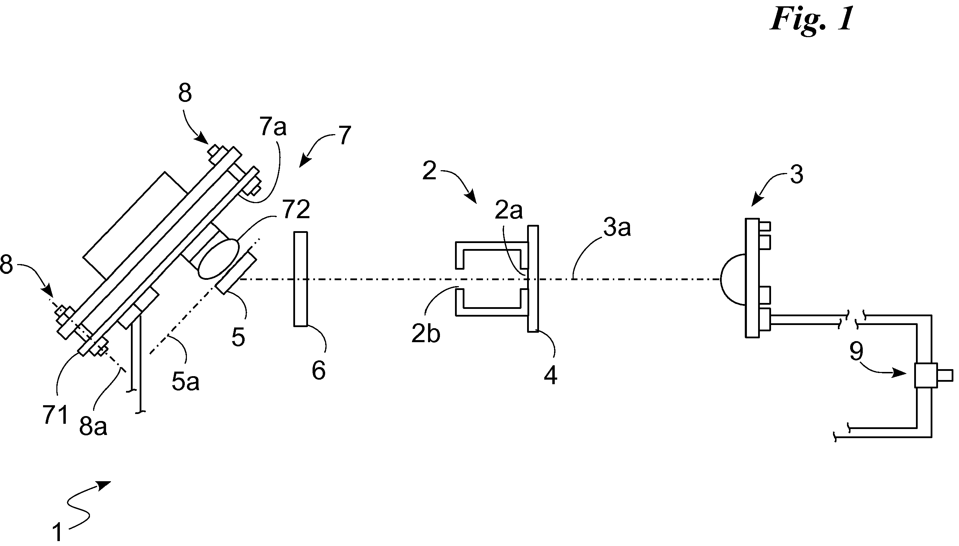

The features and advantages of the invention are clarified below by the detailed description of preferred embodiments of the invention, with reference to **Fig. 1**, wherein a schematisation of the spectrophotometer is shown according to the invention.

In this document, when measurements, values, shapes and geometrical references (such as perpendicularity and parallelism) are associated with words, such as "approximately" or other similar terms, for example "practically" or "substantially", they are to be understood as without errors of measurement or inaccuracies resulting from production and/or manufacturing errors and, above all, without a slight divergence from the value, measurement, shape or geometrical reference with which it is associated. For example, if said terms are associated with a value, they preferably indicate a divergence of no more than 10% of the same value.

Furthermore, when terms such as "first", "second", "greater", "lower", "principal" and "secondary" are used, they do not necessarily identify an order, a relationship priority or relative position, but they may simply be used to distinguish different components more clearly.

Unless otherwise stated, the measurements and data reported in this text are understood to be carried out in International Standard Atmosphere ICAO (ISO 2533).

Unless otherwise specified, as is reflected in the following discussions, consider that terms, such as "processing", "computing", "determination", "calculation", or similar, refer to the action and/or processes of a computer or a similar electronic calculating device, which manipulates and/or transforms data represented as physical, such as electronic register sizes of a computer system and/or memories in other data similarly represented as physical quantities in computer systems, registers or other information memorisation, transmission or display devices. With reference to the Figures, the spectrophotometer according to the invention is globally indicated with number **1**.

It is designed to analyse a sample using radiation engraving the sample to be analysed and examining the radiation exiting (by reflection and/or absorption) the sample. In particular, the spectrophotometer 1 is designed to analyse a sample engraving it with a light radiation (a light). More specifically, the spectrophotometer 1 is designed to analyse a sample detecting the absorbance thereof (the absorbance spectrum) of a light radiation preferably in the visible field, of ultraviolet, infrared, ultraviolet, ultraviolet-visible, and/or ultraviolet-visible-infrared.

The sample can be a fluid opportunely a liquid or opportunely a solid. It can be placed in a cuvette.

The spectrophotometer 1 can comprise a casing, not shown in the figure, adapted to define a housing volume and the profile of the spectrophotometer 1.

The spectrophotometer 1 can comprise a support **2** for the sample and in particular the cuvette.

The support 2 can define at least one inlet slit **2a** adapted to allow the radiation to engrave the sample in the support 2.

The support 2 can define at least one outlet slit **2b** adapted to allow the exiting, from the support, of the radiation exiting the sample (by reflection or absorption). Preferably, the slits 2a and 2b are substantially equal to each other. Alternatively, the slits 2a and 2b can be different from each other.

The support 2 is integral with the casing and housable in the housing volume.

The spectrophotometer 1 is associable with at least one source **3** designed to emit a radiation engraving the sample in the support 2.

The source 3 can be designed to emit a light radiation preferably in the visible field, of infrared, ultraviolet, ultraviolet-visible, and/or ultraviolet-visible-infrared.

The source 3 can comprise at least one LED designed to emit said light radiation. The source 3 is designed to emit a radiation defining a propagation axis **3a**. Opportunely, the inlet 2a and outlet 2b slits are along the axis 3a and almost perpendicular to the propagation axis 3a. In detail, the propagation axis 3a is substantially barycentric to the slits 2a and 2b.

The spectrophotometer 1 can comprise a source 3. The source 3 can be integral with the casing and housable in the housing volume. Alternatively, the source 3 may not be part of the device 1 and, consequently, outside the casing and, for example, identifiable in a LED/flash of a smartphone.

The spectrophotometer 1 can comprise an optical equaliser **4** adapted to equalise the intensity of the radiation entering the sample and, consequently, the support 2. The optical equaliser 4 is interposed between source 3 and support 2 and, to be precise, it is adjacent to the inlet slit 2a. Preferably, the spectrophotometer 1 only has the optical equaliser 4 between source 3 and support 2. Thus, the spectrophotometer 1 may not have lenses, mirrors or other similar elements adapted to deviate the radiation between source 3 and support 2.

The optical equalizer 4 is designed to level the radiation emitted by the source 3 absorbing portions of the radiation spectrum at radiation peaks.

The optical equaliser 4 may comprise a semi-transparent filter comprising pigments designed to absorb said portions of the spectrum.

The optical equaliser 4 can be integral with the casing and housable in the housing volume.

The spectrophotometer 1 can comprise a diffractor **5** adapted to diffract the radiation exiting the sample.

In detail, the diffractor 5 is adapted to divide the radiation exiting the sample into a plurality of diverging beams, each of which characterised by an own wavelength thereof.

The diffractor 5 defines a diffraction surface **5a**, obtained along which are one or more openings adapted to diffract the radiation. In particular, it is identifiable in a diffraction grid comprising a plate on which a weave of lines is engraved defining openings, which, when crossed by the radiation, divide the radiation into beams, each having an own wavelength thereof and reciprocally divaricated according to the wavelength.

The diffraction surface 5a can be perpendicular to the propagation axis 3a.

Alternatively, the diffraction surface 5a can be oblique with respect to the propagation axis 3a. Opportunely, the divarication angle, calculated between the normal to the diffraction surface 5a and propagation axis 3a is substantially from 15° to 75° and specifically from 30° to 50°. More opportunely, the divarication angle is substantially equal to 37°.

The diffractor 5 can be integral with the casing and housable in the housing volume. The spectrophotometer 1 can comprise at least one collimator **6**, opportunely only one, adapted to intercept the radiation exiting the sample before it reaches the diffractor 5.

Preferably, the spectrophotometer 1 has only the collimator 6 between diffractor 5 and support 2 and, optionally, a second collimator 6 close to the support 2. Thus, the spectrophotometer 1 may not have lenses, mirrors or other similar elements adapted to deviate the radiation between diffractor 5 and support 2.

The collimator 6 can comprise and, in particular, be identified in a collimation slit for the radiation exiting the sample.

The collimation slit is along the propagation axis 3a and substantially perpendicular to the propagation axis 3a. Specifically, the propagation axis 3a is substantially barycentric to the collimation slit.

The collimation slit can have a linear extension, calculated along a direction perpendicular to the propagation axis 3a, substantially of 20-200 µm.

The collimator 6 can be integral with the casing and housable in the housing volume. The spectrophotometer 1 is associable with a detector 7 defining a sensitive surface 7a adapted to receive the radiation exiting the diffractor 5, allowing the detection of the radiation spectrum exiting the sample.

Advantageously, the sensitive surface 7a is substantially parallel to the diffraction surface 5a.

The detector 7 can comprise a sensor **71** adapted to define the sensitive surface. The detector 7 can thus be integral with the casing and housable in the housing volume.

The sensor 71 is opportunely of the optical type, in other words, adapted to detect a light radiation preferably in the visible field, of infrared, ultraviolet, ultraviolet visible, and/or ultraviolet-visible-infrared.

It can be selected from one or more of the following sensors: CCD sensor (charge-coupled device); CMOS sensor (complementary metal-oxide semiconductor).

The detector 7 can comprise a lens **72** placed between the surfaces 5a and 7a and adapted to focus on the sensor 71 and, consequently, the sensitive surface on the diffractor 5 and, to be precise, on the diffraction surface 5a.

The lens 72 is a focal length lens so as to focus the diffracted image of the slit 6. Advantageously, the lens 72 is the only lens of the spectrophotometer 1. Preferably, the lens 72 is substantially in contact with the diffractor 5 and, specifically, with the diffraction surface 5a.

The spectrophotometer 1 can comprise the detector 7, which can therefore be integral with the casing and placed in the housing volume.

Alternatively, the detector 7 may not be part of the spectrophotometer 1 and, consequently, outside the casing. For example, it can be identified in the sensor of a camera or a video camera of a smartphone. In this case, the casing can comprise a support surface for the detector 7 adapted to place the sensitive surface 7a substantially parallel to the diffraction surface 5a when the detector 7 is resting thereon. Said support surface can be substantially parallel to the diffraction surface 5a so as to have parallelism between the surfaces 5a and 7a.

The spectrophotometer 1 can comprise a regulator 8 for the distance between sensitive surface 7a and diffraction surface 5a.

The regulator 8 is adapted to reciprocally move diffractor 5 and detector 7 along a translation axis **8a** opportunely substantially perpendicular to said surfaces 7a and 5a.

Preferably, the regulator 8 is adapted to move the detector 7 with respect to the diffractor 5 along the translation axis 8a.

The regulator 8 is adapted to bring the sensor 71 close to the diffractor 5 so as to minimise the distance between the surfaces 7a and 5a. In particular, it is adapted to bring the lens 72 substantially adjacent and, specifically, in contact with the diffractor 5 and, to be precise, the diffraction surface 5a.

It is highlighted how, in the case of a detector 7, which is not part of the spectrophotometer 1, the regulator 8 is adapted to vary the distance between the surfaces 5a and 7a moving the support surface of the detector 7 along said regulation axis 8a.

The spectrophotometer 1 can comprise a connector **9** adapted to make a data connection (wireless and/or wired) to an external device.

The spectrophotometer 1 can comprise a supply system for the spectrophotometer 1.

The supply system can comprise a battery.

The spectrophotometer 1 is associable with a control unit adapted to analyse the spectrum detected by the detector 7, comparing it with the spectrum of a white sample.

The spectrophotometer 1 can comprise the control unit, which can therefore be integral with the casing and placed in the housing volume.

Alternatively, the control unit may not be part of the spectrophotometer 1 and, consequently, outside the casing. For example, it can be identified in an application implemented in a smartphone, a computer or another processor.

The working of the spectrophotometer 1 described previously in structural terms is as follows.

Initially, the operator places the sample to be analysed in a cuvette, which is then inserted into the support 2 between the slits 2a and 2b.

At this point, the operator activates the source 3, which emits a radiation (opportunely light) engraving the sample in the support 2.

In particular, the radiation, advancing along the propagation axis 3a, crosses the optical equaliser 4, which levels the radiation absorbing portions of the spectrum at radiation peaks; it enters the support 2 through the inlet slit 2a; it engraves the sample.

The radiation exiting the sample by reflection or, preferably by absorption, exits the support 2 by means of the outlet slit 2b, crosses the collimator 6 and reaches the diffractor 5 where it is diffracted.

The radiation exiting the sample is thus divided into a plurality of diverging beams, each characterised by an own wavelength thereof. Said diverging beams are opportunely oblique to the propagation axis 3a.

It is highlighted how the radiation propagates substantially linearly along the propagation axis 3a without undergoing deviations until it reaches the diffraction surface 5a.

The beams meet the lens 72 and reach the sensitive surface 7a, allowing the detector 7 to detect the radiation spectrum exiting the sample.

At this point, the control unit analyses the radiation spectrum exiting the sample, recently detected by the detector 7, comparing it with the spectrum of a previously acquired white sample.

The spectrophotometer 1 according to the invention presents important advantages. One important advantage is given by having the sensitive surface 7a almost parallel to the diffraction surface 5a, which translates into the possibility of placing the detector 7 next to the diffractor 5, focusing the detector 7 on the diffractor 5 (on the slits of the diffraction surface 5a) and consequently preventing the dispersion of the diffracted radiation, making lenses or mirrors superfluous.

Furthermore, the parallelism between the surfaces 5a and 7a causes the cone formed by the diffracted beams of radiation exiting the sample to be perpendicular to the sensitive surface, improving the analysis quality and precision of the spectrophotometer 1.

A further advantage lies in the fact that the parallelism between the surfaces 5a and 7a allows a reduction in the size of the spectrophotometer 1, consequently making it easier and simpler to carry and handle compared to spectrophotometers known today.

A further advantage lies in the fact that, obviously apart from the lens 72, with which a detector is commonly provided, the spectrophotometer 1 makes high quality acquisitions despite being devoid of mirrors, lenses or other radiation-deviating elements.

Such advantage is further accentuated by the presence of the collimator 6.

A further advantage is given by the optical equalizer 4, which improves the quality of the analysis, levelling the radiation emitted by the source.

The invention is subject to variations within the scope of the inventive concept defined by the claims. In such scope, all of the details can be replaced by equivalent elements and any materials, shapes and sizes can be used.

## Claims

1. A spectrophotometer (1) designed to analyse a sample; said spectrophotometer (1) being associable with a source (3) designed to emit a radiation engraving said sample and comprising
- a support (2) suitable for supporting said sample when engraved by said rad iation;
- a diffractor (5) defining a diffraction surface (5a) capable of separating the radiation exiting said sample according to the wavelength;
- a detector (7) defining a sensitive surface (7a) adapted to receive the radiation exiting said diffractor (5);
and **characterised in that**
- said sensitive surface (7a) is substantially parallel to said diffraction surface (5a).

2. A spectrophotometer (1) according to claim 1, wherein said detector (7) is adjacent to said diffractor (5) so that said detector (7) is focused on said diffractor (5).

3. A spectrophotometer (1) according to the preceding claim, wherein said detector 7 comprises a sensor (71) defining said sensitive surface and a lens (72) designed to focus said sensor (71) on said diffraction surface (5a); and wherein said lens (72) is adjacent to said diffraction surface (5a).

4. A spectrophotometer (1) according to at least one preceding claim, comprising a regulator (8) capable of reciprocally moving said detector (7) and said diffractor (5) by varying the distance between said sensitive surface (7a) and said diffraction surface (5a).

5. A spectrophotometer (1) according to the preceding claim, wherein said regulator (8) is capable of reciprocally moving said detector (7) and said diffractor (5) along a translation axis (8a) substantially perpendicular to said surfaces (7a, 5a).

6. A spectrophotometer (1) according to at least one preceding claim, comprising a collimator (6) interposed between said support (2) and said diffractor (5) for collimating said radiation exiting said sample.

7. A spectrophotometer (1) according to at least one preceding claim, comprising an optical equaliser (4) adapted to equalise the intensity of said radiation engraving said sample.

8. A spectrophotometer (1) according to at least one preceding claim, being devoid of lenses between said source (3) and said diffractor (5).
